# EUROPEAN PATENT SPECIFICATION

(11) **EP 1 859 924 B1**
(45) Date of publication and mention of the grant of the patent: **26.10.2016**
(21) Application number: 06715281.9
(22) Date of filing: 06.03.2006
(51) Int. Cl.: B29D 30/00, B29D 30/16, B29D 30/30, B60C 5/14, B60C 9/02

(54) **METHOD FOR PRODUCING PNEUMATIC TIRE**
VERFAHREN ZUR HERSTELLUNG EINES LUFTREIFENS
METHODE DE PRODUCTION DE PNEUS

(30) Priority: 07.03.2005 JP 2005061808
(43) Date of publication of application: 28.11.2007
(73) Proprietor: THE YOKOHAMA RUBBER CO., LTD., Tokyo 105-8685 (JP)
(72) Inventor: HASHIMURA, Yoshiaki, Kanagawa (JP); SAWADA, Takahiko, Kanagawa (JP)
(74) Representative: Hoffmann Eitle
(86) International application number: PCT/JP2006/304261
(87) International publication number: WO 2006/095680

(56) References cited:
- EP-A1- 1 375 118
- JP-A- 2002 018 973
- JP-A- 2003 266 555
- US-A1- 2003 051 794
- US-A1- 2003 102 088
- US-B1- 6 397 912

## Description

### TECHNICAL FIELD

The present invention relates to a method of producing a pneumatic tire. Embodiments of the invention relate to a method of producing a pneumatic tire in which the rate of occurrence of trouble can be reduced when a layer of film having a thermoplastic resin as a main component is used.

### TECHNICAL BACKGROUND

In order to reduce the weight of a tire, there have been proposed a pneumatic tire having an inner liner layer formed from a layer of film including a thermoplastic resin as a main component instead of rubber, the inner liner layer being disposed facing to the cavity of the tire as an air permeation prevention layer (see Japanese Patent Application Kokai Publication HEI 10-35232, for example).

The above inner liner layer formed from a layer of film including a thermoplastic resin as a main component, when air which remains between the inner liner layer and a rubber layer adjacent thereto is not dispersed therearound but remains as an air pocket, is more apt to produce a trouble of partially protruding in the tire cavity arising from the air of the air pocket that has expanded after curing of the tire, that is, a blister trouble (expansion caused by the air pocket) than one using rubber; a problem is that the rate of occurrence of the trouble is higher.

JP 2002-018973 A discloses a method falling within the scope of the preamble of Claim 1. Further prior art is known from JP 2003-266555 A, EP 1 375 118 A1; and US 2003/102088 A1. Still further prior art is known from US 6,397,912 B1, which discloses a pneumatic tire with colored thermoplastic elastomer layer adjacent a black-concealing layer.

### SUMMARY OF THE INVENTION

According to the present invention, there is provided a method of producing a pneumatic tire in which a green tire having a layer of film having a thermoplastic resin as a main component, and an uncured rubber layer provided thereon is cured, the method being characterized by the steps of applying at least one uncured rubber strip serially onto the film layer from one longitudinal end side of the at least one uncured rubber strip, and pressing the applied at least one uncured rubber strip onto the film layer serially by pressing means from the one longitudinal end side of the at least one uncured rubber strip while applying the at least one uncured rubber strip, whereby the at least one uncured rubber strip is applied onto the film layer to form the uncured rubber layer, wherein the at least one uncured rubber strip has a width of 5 mm to 50 mm and opposite widthwise ends, wherein the step of applying at least one uncured rubber strip comprises applying the at least one uncured rubber strip in such a manner that the opposite widthwise ends overlap with each other, wherein one widthwise end has a thickness of 0.1 mm to 1.1 mm at an edge thereof, wherein the uncured rubber layer is an uncured rubber layer having reinforcing cords embedded therein, and wherein the at least one uncured rubber strip is a uncured rubber strip having a reinforcing cord embedded therein.

A pneumatic tire is one produced according to the above production method.

An advantage obtainable with embodiments of the present invention is to provide a method of producing a pneumatic tire in which the rate of occurrence of trouble can be reduced when a layer of film having a thermoplastic resin as a main component is used.

According to embodiments of the present invention, since the uncured rubber strip is used to form the uncured rubber layer, and it is applied onto the film layer having a thermoplastic resin as a main component, applying the uncured rubber strip onto the film layer with even tensions can be facilitated. Therefore, occurrence of wrinkles can be avoided. On the other hand, since residual air is limited within the width of the narrow uncured rubber strip, occurrence of a large air pocket can be prevented. Further, when the uncured rubber strip is pressed onto the film layer for adhesion thereto, air which remains between the film layer and the uncured rubber strip can easily be pushed out in the widthwise direction of the uncured rubber strip. Accordingly, the film layer is suppressed from being inflated due to expansion of air in an air pocket, enabling the rate of occurrence of a trouble arising from inflation to be lowered.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a partial cross-sectional view showing an example of a pneumatic tire produced according to a method of producing a pneumatic tire according to the present invention;
FIG. 2 is an explanatory drawing showing a state where an inner liner layer formed from a layer of film having a thermoplastic resin as a main component has been mounted on a building drum in the method of producing a pneumatic tire according to the present invention;
FIG. 3 is an explanatory drawing showing a state where an adhesion rubber layer formed from an uncured rubber strip has been formed on the inner liner layer in the method of producing a pneumatic tire according to the present invention;
FIG. 4 is an explanatory drawing showing the step of pressing the uncured rubber strip against the inner liner layer while winding the uncured rubber strip thereon;
FIG. 5 is an explanatory drawing showing a state where a first assembly has been formed on the building drum in the method of producing a pneumatic tire according to the present invention;
FIG. 6 is an explanatory drawing showing the step of inflating and press-attaching the first assembly to a second assembly to build a green tire;
FIG. 7 is a perspective explanatory drawing showing an example of the case where the uncured rubber strip is applied onto the inner liner layer with the opposite widthwise ends thereof overlapping with each other;
FIG. 8 is a cross-sectional view showing a state where the opposite widthwise ends of a cross-sectionally trapezoid-shaped uncured rubber strip overlap with each other;
FIG. 9 is an enlarged cross-sectional view showing an example of the uncured rubber layer used for forming an uncured carcass ply on the inner liner layer;
FIG. 10 is an enlarged cross-sectional view showing another example of the uncured rubber layer used for forming an uncured carcass ply on the inner liner layer; and
FIG. 11 is a cross-sectional view showing an example not forming part of the present invention of the uncured rubber layer applied with the opposite widthwise end faces thereof butting against each other.

### DETAILED DESCRIPTION

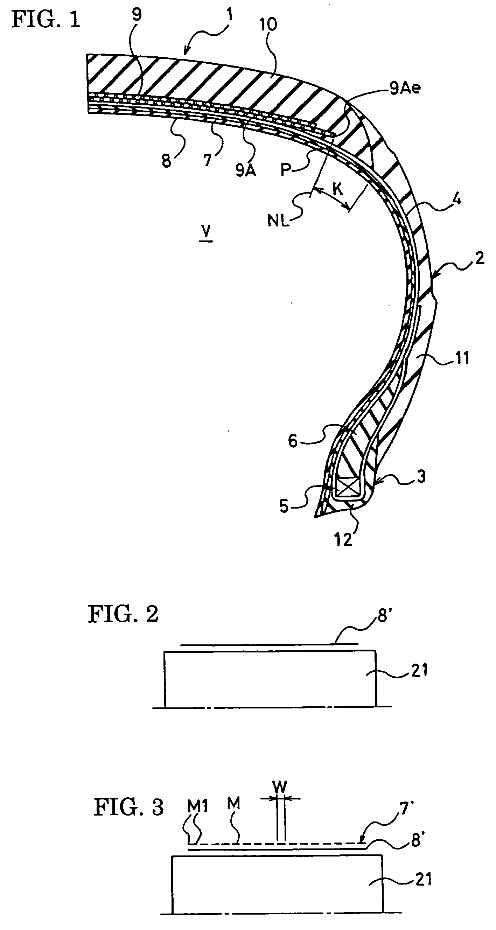

Embodiments of the present invention will be described in detail below with reference to the attached drawings.
Referring to FIG. 1, there is shown an example of a pneumatic tire produced according to a method of producing a pneumatic tire according to the present invention; reference numeral 1 denotes a tread portion, reference numeral 2 a sidewall portion, and reference numeral 3 a bead portion.

An annular carcass ply 4 extends between the right and left bead portions 3, the carcass ply having a rubber layer and reinforcing cords embedded therein, the reinforcing cords extending in the radial direction of the tire and being arranged at prescribed intervals in the circumferential direction of the tire; the opposing end portions of the carcass ply are turned up from the inner side of the tire towards the outer side thereof around a ringshaped bead core 5 embedded in each bead portion 3 with a bead filler 6 being sandwiched. An annular inner liner layer 8 is disposed inwardly of the carcass ply 4 via an annular adhesion rubber layer 7 for securing a good adhesion to the carcass ply 4.

The inner liner layer, which is disposed facing to the cavity V of the tire, is formed from a layer of film of a thermoplastic elastomer composition having a thermoplastic resin as a main component and an elastomer blended therewith; by using the layer of film having a thermoplastic resin as a main component instead of the conventional rubber layer, the weight of the tire is reduced. As the thermoplastic elastomer, a conventionally known one used for the layer of film constituting the inner liner layer 8 can be employed (see Japanese Patent Application Kokai Publication HEI 10-35232, for example); examples of the thermoplastic resin of the main component include polyamide system resins and polyester system resins, and examples of the elastomer include diene system rubbers and olefin system rubbers.

A plurality of belt plies 9 are provided radially outwardly of the carcass ply 4 in the tread portion 1. A tread rubber layer 10 are disposed radially outwardly of the belt plies 9. A side rubber layer 11 is placed outwardly of the carcass ply 4 in each sidewall portion 2. A cushion rubber layer 12 is provided outwardly of a turned-up portion of the carcass ply 4 in each bead portion 3.

A method of producing the pneumatic tire of FIG. 1 will be described below with reference to FIGS. 2 to 6, using the producing method of the present invention.

First, as shown in FIG. 2, a tubular film layer 8' having the thermoplastic resin as a main component is mounted on a building drum 21. Next, as shown in FIG. 3, an uncured adhesion rubber layer 7' is formed on the film layer 8'. In doing so, an uncured rubber strip M is spirally wound in the circumferential direction of the building drum 21 (tire circumferential direction) on the film layer 8' with the opposite widthwise end faces M1 thereof being in contact with each other, and sequentially applied onto the film layer 8' to form the uncured adhesion rubber layer 7'. Note that in FIG. 3, the uncured adhesion rubber layer 7' is shown in a state where there is a space between the opposite widthwise end faces M1 for ease of viewing the drawing.

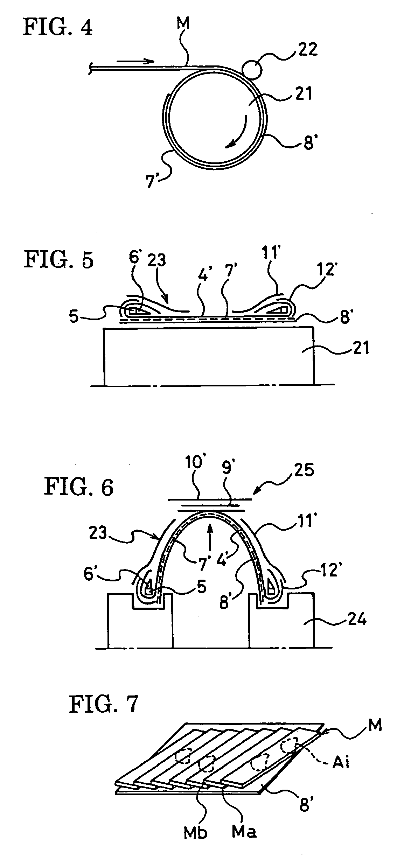

As shown in FIG. 4, while the uncured rubber strip M is wound such that it is sequentially applied onto the film layer 8' from one longitudinal end side thereof, the uncured rubber strip M is serially pressed onto the film layer 8' by a rotatable roller (pressing means) 22 from the one longitudinal end side of the uncured rubber strip M applied, whereby the uncured rubber strip M is attached by pressing onto the film layer 8' and air between the uncured rubber strip M and film layer 8' is pushed outside.

After forming of the uncured adhesion rubber layer 7', an uncured carcass ply 4', bead cores 5 with uncured bead fillers 6', uncured cushion rubber layers 12', and uncured side rubber layers 11' are mounted to form a first cylindrical assembly as is conventional (see FIG. 5).

The first assembly 23 is removed from the building drum 21, and set to a shaping drum 24 as shown in FIG. 6; an inner pressure is applied thereto, whereby the first assembly 23 is toroidally inflated and is attached by pressing to the radially inner side of a second cylindrical assembly 25 placed radially outwardly of the first assembly 23 to build a green tire, the second assembly 25 having uncured belt plies 9' and uncured tread rubber layer 10' put on the radially outer side thereof. The green tire is pressurized and heated in a mold to cure it, obtaining the pneumatic tire of FIG. 1.

Conventionally, an operator cylindrically winds an uncured rubber sheet on the film layer 8' to form the uncured adhesion rubber layer 7'. After formation of the uncured adhesion rubber layer 7', the uncured adhesion rubber layer 7' is sequentially pressed against the film layer 8' by rollers, whereby the uncured adhesion rubber layer 7' is attached by pressing to the film layer 8', and air which remains between the uncured adhesion rubber layer 7' and the film layer 8' is pushed out for removal.

However, since the uncured rubber sheet is wide in width (there is a distance between the right and left edges of the sheet), wrinkles are created if winding tensions of the right and left thereof are different from each other. Therefore, in some cases, air which remains between the uncured adhesion rubber layer 7' and the film layer 8' can not be effectively removed to the sheet edges; air remains as a large air pocket between the uncured adhesion rubber layer 7' and the film layer 8'. The residual air expands after curing of a green tire, which causes the film layer to be partially protruded.

According to embodiments of the present invention, since the uncured rubber strip M is used to form the uncured adhesion rubber layer 7', and it is serially applied onto the film layer 8', air which remains between the uncured adhesion rubber layer 7' and the film layer 8' can easily be pushed out in the widthwise direction of the uncured rubber strip M when the uncured rubber strip M is sequentially pressed and attached onto the film layer 8' with the roller 22. Since the uncured rubber strip M is much less in width than the conventionally used uncured rubber sheet, winding tensions of the right and left thereof are not different from each other, which can avoid creating wrinkles. Since the residual air Ai (see FIG. 7) is limited within the width of the uncured rubber strip M, a large air pocket can be prevented from occurring. Accordingly, the film layer (inner liner layer) 8 is suppressed from being partially protruded in the cavity V of the tire arising from expansion of the residual air, allowing the rate of occurrence of a protrusion trouble to be lowered.

In the present invention, the width W of the uncured rubber strip M is preferably in the range of 5 mm to 50 mm. If the width W of the uncured rubber strip M is less than 5 mm, a problem of, for example, cutting of the uncured rubber strip M is apt to occur when it is applied because it is too narrow, and since the time when the uncured rubber strip M is applied to form the uncured adhesion rubber layer 7' increases, formability is deteriorated. If the width W of the uncured rubber strip M exceeds 50 mm, it is difficult to effectively remove the residual air. It is more preferably 7 mm to 20 mm, and most preferably 7 mm to 15 mm.

It is preferable in terms of tire weight that the uncured rubber strip M be applied onto the film layer 8' in a manner that the opposite widthwise end faces M1 of the uncured rubber strip contact with each other so as to butt against each other. Since rubber heated during curing moves, some amount of gap may exist between the opposite widthwise end faces M1 butted against each other.

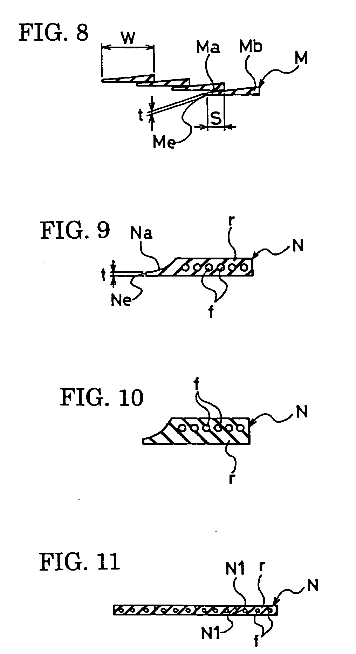

In the alternative of butting of the opposite widthwise end faces M1, as shown in FIGS. 7 and 8, the uncured rubber strip M may be applied in such a manner that the opposite widthwise ends Ma and Mb of the uncured rubber strip overlap with each other. Although a bump is produced in an overlap area, there is no problem as the bump is nearly disappeared due to move of rubber during curing.

In the case where the opposite widthwise ends Ma and Mb of the uncured rubber strip M overlap with each other as described above, it is preferable that the ratio S/W of the overlap distance S of the opposite widthwise ends Ma and Mb of the uncured rubber strip M to the width W of the uncured rubber strip M be equal to or less than 0.5. If the ratio S/W exceeds 0.5, that is, the overlap distance becomes long, it is not preferable because an unwanted tire weight increases and the time also increases when the uncured rubber strip M is wound to form the uncured adhesion rubber layer 7'. The ratio S/W is more preferably equal to or less than 0.2.

When the opposite widthwise ends Ma and Mb of the uncured rubber strip M overlap with each other, as shown in FIG. 8, the uncured rubber strip M has one widthwise end Ma which comes into contact with the film layer 8', and the other widthwise end Mb which comes into contact with the one widthwise end Ma on the upper side thereof. In this case, the thickness t of the one widthwise end Ma of the uncured rubber strip M is preferably in the range of 0.1 mm to 1.1 mm at the edge Me thereof. If the thickness t of the one widthwise end Ma is less than 0.1 mm, it is difficult to obtain an uncured rubber strip M with a desired width because the shape of the uncured rubber strip M is unstable when the uncured rubber strip M is formed by extrusion. If the thickness t of the one widthwise end Ma exceeds 1.1 mm, a bump produced in an overlap area becomes large, which causes air to be trapped in the area.

When the uncured adhesion rubber layer 7' is formed on the film layer 8', it is preferable in terms of formation efficiency that one uncured rubber strip M be spirally wound as described above; however, a plurality of uncured rubber strips may be used to form the uncured adhesion rubber layer 7'. Also, a plurality of uncured rubber strips may be used and be applied along or in an inclined manner with respect to the widthwise direction of the building drum 21 with the plurality of uncured rubber strips offset serially in the circumferential direction of the building drum 21.

The cross-sectional shape of the uncured rubber strip M may be any shape if the uncured adhesion rubber layer 7' can be formed without trouble; for example, a parallelogram, rectangle, trapezoid can preferably be mentioned.

In the above embodiment, the uncured adhesion rubber layer 7' is entirely formed from the uncured rubber strip M; however, an air pocket produced between the uncured adhesion rubber layer 7' and the film layer 8 is apt to occur especially in a region where a bladder for pressing a tire from inside during curing presses last when inflated, that is, in a region K (see FIG. 1) of 20 mm from an intersection point P of the carcass ply 4 with a normal line NL drawn to the carcass ply 4 from each edge 9Ae of the widest belt ply 9A toward the bead portion 3 side along the carcass ply 4. Therefore, only a part of the uncured adhesion rubber layer 7' corresponding to at least the region K may be formed with the uncured rubber strip M.

A pneumatic tire produced according to the production method of the present invention is not limited to the above-described tire shown in FIG. 1, but may be one, for example, in which the adhesion rubber layer 7 is not provided, and the inner liner layer 8 is disposed directly inwardly of the carcass ply 4. In this case, a plurality of uncured rubber strips N each having an uncured rubber layer r and reinforcing cords f embedded therein as shown in FIG. 9 are used and are applied onto the film layer 8' around the entire circumference of the building drum in a manner that they extend along the widthwise direction of the building drum 21 (tire widthwise direction) and are offset serially in the circumferential direction of the building drum 21 with the plurality of uncured rubber strips partially overlapping with one another, forming an uncured carcass ply with the reinforcing cords f embedded therein.

The uncured rubber strip N shown in FIG. 9 is trapezoid-shaped, and the thickness t of one widthwise end Na of the uncured rubber strip N is in the range of 0.1 mm to 1.1 mm at the edge Ne thereof. As shown in FIG. 10, an uncured rubber strip N may be used which has an uncured rubber layer r and reinforcing cords f therein offset to one side (upper side in the drawing) thereof.

In examples not forming part of the present invention, when the uncured rubber strip N is applied in such a manner that the opposite widthwise ends Ma and Mb do not overlap with each other, but the opposite widthwise end faces M1 contact with each other, an uncured rubber strip which is, for example, rectangle-shaped in cross section as shown in FIG. 11 or parallelogram-shaped in cross section can be used.

The present invention is preferably usable for producing a pneumatic tire in which a layer of film having a thermoplastic resin as a main component is used for the inner liner layer 8 in particular; however, the present invention is also preferably usable for producing a pneumatic tire having a layer of film including a thermoplastic resin as a main component as a reinforcement layer or the like disposed within the tire, and a rubber layer provided outwardly of the film layer, the rubber layer being formed of only rubber or having reinforcing cords embedded therein.

### EXAMPLE

100 test tires each having a tire size of 195/65R15 and a construction of FIG. 1 were produced according to each of the present invention methods 1 to 4 and conventional method; in each of the present invention methods 1 to 4, an uncured rubber strip M having a width W, ratio S/W, and thickness t as shown in Table 1 was used to form the uncured adhesion rubber layer on the inner liner layer formed from a film layer; in the conventional method, an uncured rubber sheet (width of 360 mm, thickness of 1.0 mm) was used to form the uncured adhesion rubber on the inner liner layer formed from a film layer.

100 test tires each having a tire size of 195/65R15 and a construction of FIG. 1 without the adhesion rubber layer were produced according to the present invention method 5, in which a plurality of uncured rubber strips each having reinforcing cords (polyester cords) and having a width W, ratio S/W, and thickness t as shown in Table 1 were used to form the uncured carcass ply directly on the inner liner layer formed from a film layer.

In the 100 test tires each, the blister trouble occurrence rate of the inner liner layers formed from film layers was examined, obtaining the results shown in Table 1.

[Table 1]

**[Table 1]**

| | Width W(mm) | S/W | Thickness t(mm) | Trouble Occurrence Rate (%) |
|---|---|---|---|---|
| Conventional Method | - | - | - | 6 |
| Present Invention Method 1 | 50 | 0.1 | 1.0 | 1 |
| Present Invention Method 2 | 10 | 0.5 | 1.0 | 1 |
| Present Invention Method 3 | 10 | 0 | 1.0 | 1 |
| Present Invention Method 4 | 15 | 0.2 | 0.5 | 0 |
| Present Invention Method 5 | 10 | 0.2 | 0.3 | 2 |

From Table 1, it is understood that the pneumatic tires produced according to the present invention methods have low blister trouble occurrence rates of the film layers, and can reduce the trouble occurrence rates.

### INDUSTRIAL APPLICABILITY

The method of producing a pneumatic tire according to the present invention having the aforementioned excellent effect can be very effectively utilized for producing a pneumatic tire mounted on a vehicle including a layer of film having a thermoplastic resin as a main component, and a rubber layer provided thereon.

## Claims

1. A method of producing a pneumatic tire in which a green tire having a layer of film (8') having a thermoplastic resin as a main component, and an uncured rubber layer (r) provided thereon is cured, the method being **characterized by** the steps of applying at least one uncured rubber strip (M) serially onto the film layer (8') from one longitudinal end side of the at least one uncured rubber strip, and pressing the applied at least one uncured rubber strip onto the film layer (8') serially by pressing means from the one longitudinal end side of the at least one uncured rubber strip while applying the at least one uncured rubber strip, whereby the at least one uncured rubber strip is applied onto the film layer (8') to form the uncured rubber layer, wherein the at least one uncured rubber strip has a width of 5 mm to 50 mm and opposite widthwise ends, wherein the step of applying at least one uncured rubber strip comprises applying the at least one uncured rubber strip in such a manner that the opposite widthwise ends overlap with each other, wherein one widthwise end has a thickness of 0.1 mm to 1.1 mm at an edge thereof, wherein the uncured rubber layer (r) is an uncured rubber layer having reinforcing cords (f) embedded therein, and wherein the at least one uncured rubber strip is a uncured rubber strip having a reinforcing cord (f) embedded therein.

2. A method of producing a pneumatic tire according to claim 1, wherein a ratio S/W of the overlap distance S of the opposite widthwise ends of the at least one uncured rubber strip to the width W of the at least one uncured rubber strip is equal to or less than 0.5.

3. A method of producing a pneumatic tire according to any one of claims 1 or 2, wherein the film layer (8') is formed of a thermoplastic elastomer composition having the thermoplastic resin and an elastomer blended therewith.

## Patentansprüche

1. Verfahren zum Herstellen eines pneumatischen Reifens, bei dem ein Rohreifen eine Filmschicht (8') aufweist, die ein thermoplastisches Harz als eine Hauptkomponente, und eine darauf vorgesehene ungehärteten Gummischicht (r) aufweist, ausgehärtet wird, wobei das Verfahren durch die Schritte gekennzeichnet ist, Anbringen mindestens eines ungehärteten Gummistreifens (M), seriell, an die Filmschicht (8'), von einer Längsstirnseite des mindestens einen nicht ausgehärteten Gummistreifens, und Anpressen des angebrachten mindestens einen ungehärteten Gummistreifens seriell an die Filmschicht (8') mittels einer Pressvorrichtung von der einen Längsstirnseite des mindestens einen nicht ausgehärteten Gummistreifens, während der zumindest eine nicht ausgehärtete Gummistreifen an der Filmschicht (8') angebracht ist, um die ungehärtete Gummischicht auszubilden, wobei der zumindest eine nicht ausgehärtete Gummistreifen eine Breite von 5 mm bis 50 mm und sich gegenüberliegende, breitseitige Enden aufweist, wobei der Schritt des Anbringens des zumindest eine nicht ausgehärteten Gummistreifens umfasst: Aufbringen des zumindest eine nicht ausgehärteten Gummistreifens derart, dass die sich gegenüberliegenden, breitseitigen Enden einander überlappen, wobei ein breitseitiges Ende an einer Kante davon eine Dicke von 0,1 mm bis 1,1 mm aufweist, wobei die nicht ausgehärtete Gummischicht (R) eine ungehärtete Gummischicht mit darin eingebetteten Verstärkungskorden (f) ist, und wobei der zumindest eine nicht ausgehärtete Gummistreifen ein nicht ausgehärteter Gummistreifen mit darin eingebetteten Verstärkungskorden (f) ist.

2. Verfahren zum Herstellen eines pneumatischen Reifens gemäß Anspruch 1, wobei ein Verhältnis S/W des Überlappungsabstand S der gegenüberliegenden, breitseitigen Enden des mindestens einen nicht ausgehärtete Gummistreifens zu der Breite W des zumindest einen nicht ausgehärteten Gummistreifens gleich oder kleiner als 0,5 ist.

3. Verfahren zum Herstellen eines pneumatischen Reifens nach einem der Ansprüche 1 oder 2, wobei die Filmschicht (8') aus einer thermoplastischen Elastomerzusammensetzung, in der das thermoplastische Harz und ein Elastomer vermischt sind, ausgebildet ist.

## Revendications

1. Procédé de production d'un pneu dans lequel un pneu brut ayant une couche de film (8') ayant une résine thermoplastique en tant que composant principal, et une couche de caoutchouc non durcie (r) fournie sur celle-ci est durcie, le procédé étant **caractérisé par** les étapes d'application d'au moins une bande de caoutchouc non durcie (M) en série sur la couche de film (8') depuis une face terminale longitudinale de la au moins une bande de caoutchouc non durcie, et de pression de la au moins une couche de caoutchouc non durcie appliquée sur la couche de film (8') en série par des moyens de pression depuis la face terminale longitudinale de la au moins une bande de caoutchouc non durcie tout en appliquant la au moins une bande de caoutchouc non durcie, moyennant quoi la au moins une bande de caoutchouc non durcie est appliquée sur la couche de film (8') pour former la couche de caoutchouc non durcie, dans lequel la au moins une bande de caoutchouc non durcie a une largeur de 5 mm à 50 mm et des extrémités opposées dans le sens de la largeur, dans lequel l'étape d'application de la au moins une bande de caoutchouc non durcie comprend l'application de la au moins une bande de caoutchouc non durcie de telle sorte que les extrémités opposées dans le sens de la largeur se chevauchent l'une l'autre, dans lequel une extrémité dans le sens de la largeur a une épaisseur de 0,1 mm à 1,1 mm à un bord de celle-ci, dans lequel la couche de caoutchouc non durcie (r) est une couche de caoutchouc non durcie ayant des cordes de renforcement (f) intégrées dans celle-ci, et dans lequel la au moins une bande de caoutchouc non durcie est une bande de caoutchouc non durcie ayant une corde de renforcement (f) intégrée dans celle-ci.

2. Procédé de production d'un pneu selon la revendication 1, dans lequel un rapport S/W de la distance de chevauchement S des extrémités opposées dans le sens de la largeur de la au moins une bande de caoutchouc non durcie à la largeur W de la au moins une bande de caoutchouc non durcie est inférieur ou égal à 0,5.

3. Procédé de production d'un pneu selon l'une quelconque des revendications 1 ou 2, dans lequel la couche de film (8') est formée d'une composition d'élastomère thermoplastique ayant la résine thermoplastique et un élastomère mélangé avec celle-ci.
